# EUROPEAN PATENT SPECIFICATION

(11) **EP 1 306 355 B1**
(45) Date of publication and mention of the grant of the patent: **28.03.2007**
(21) Application number: 00988820.7
(22) Date of filing: 29.12.2000
(51) Int. Cl.: C03C 8/02, C04B 41/86

(54) **FORMULATION AND METHOD FOR ACHIEVING METALLIC EFFECTS IN CERAMIC TILES AND THE APPLICATIONS THEREOF**
ZUSAMMENSTZUNG UND VERFAHREN ZUR ERZEUGUNG VON METALLISCHEN EFFEKTEN IN KERAMISCHEN ZIEGELN UND IHRE VERWENDUNG
FORMULATION ET PROCEDE DESTINES A L'OBTENTION D'EFFETS METALLIQUES DANS DES CARREAUX CERAMIQUES ET LEURS APPLICATIONS

(30) Priority: 30.03.2000 ES 200000799
(43) Date of publication of application: 02.05.2003
(73) Proprietor: Vidres S.A. - Vidresa, 12540 Villarreal (ES)
(72) Inventor: CABRERA IBANEZ, M José, E-12540 Villarreal (ES)
(74) Representative: Soler Lerma, Santiago
(86) International application number: PCT/ES2000/000498
(87) International publication number: WO 2001/072651

(56) References cited:
- EP-A- 0 205 048
- ES-T- 2 125 112
- GB-A- 2 096 593

## Description

### TECHNICAL FIELD OF THE INVENTION

The present invention fits in the sector of industry which decorates substrata which can be fired such as the ceramic industry and in particular the ones to decorate such substrata, such as biscuit ware or ceramic tiles, with metallic effects.

More specifically, the present invention provides a new composition for the obtainment of metallic effects on substrata capable of being fired which can be such as ceramic tiles as well as a process for the use of said composition for the purpose of achieving the desired effects.

### PRIOR ART OF THE INVENTION

Within the ceramics sector one of the aspects valued the most by consumers is the presence of metallic effects on ceramic tiles, which gives them an important added value as decorative elements.

Nowadays, the production of this type of effect is normally carried out by means of preparations that are combinations of noble metals with a varied structure and combination. Normally, the majority of these preparations are a combination of noble metals with sulphur and organic substances, for example, oleo-sulphide-resinous solutions. Among these products, lustrous preparations of gold, silver and/or platinum in the form of lacquers or pastes or else powdered products are mainly used. All of them are capable of burnishing the surface of the ceramic tile providing it with a metallic effect.

These preparations comprised of noble metals an sulphur, aside from having a very high cost, have problems of toxicity, some of them in themselves such as silver derivatives and others because they are frequently contaminated by mercury.

The process for using this type of preparation implies the application thereof on the already finished tile and the additional firing of the assembly at a low temperature, which is known as the third fire technique. It requires another special kiln in which this final firing is carried out. The use of ceramic kilns with a reducing atmosphere (traditional method) is also possible but the desired effects are no so good, as there is great instability in the obtained results, at the same time that polluting gases coming from the reduction process are given off.

In accordance with the above, it is obvious for an ordinary expert in the sector, that the decorative techniques used nowadays for the obtainment of metallic effects on ceramic substrata have serious inconveniences that can be summarized in the following points:

High cost thereof due, on the one hand, to the raw materials used (metal nobles such as gold, silver or platinum); and on the other hand, due to the fact that these metals cannot be subjected to a high temperature firing cycle, needed for the obtainment of ceramic tiles by single firing, to the need for the obtainment of the desired final effect, of additional firing either in reducing atmospheres or at lower temperatures, which involves an additional manufacturing cost.
Great environmental impact in the handling of the products as well as in the wastes produced in the process for the obtainment thereof.
Low technical characteristics of this type of product, which do not provide good results with respect to compliance of the European rule EN-122 of chemical resistance of enamelled ceramic tiles.
Lack of stability with respect to the appearance and coloration of the ceramic tiles with metallized effects obtained with this type of product.

Therefore, it would be very desirable to be able to obtain some starting products and some techniques for applying them to substrata which can be fired such as ceramic tiles pre-fired or biscuit ware that overcome the above-mentioned inconveniences.

The applicant has concentrated his research efforts along these lines and has achieved a new composition which, when applied to substrata which can be fired such as ceramic tiles or raw biscuit ware, and after a single firing overcomes and provides additional important advantages in the sector.

Therefore, an object of the present invention is to provide a new composition in a single firing used to provide metallic effects on substrata capable of being fired. These substratums can be raw or pre-fired.

Moreover, another object of the present invention is to provide a process for the use of said composition for the obtainment of metallic effects on substrata which can be fired, such as ceramic tiles, with single firing, without detriment to the substratum that can be pre-fired or can be fired later for other purposes.

### DETAIL DESCRIPTION OF THE PRESENT INVENTION

The present invention refers to a new composition for the obtainment of metallic effects on substrata capable of being fired such as ceramic tiles and to the process of use of said composition in order to obtain said effects and to the tiles obtained thereby.

More specifically, the present invention refers to a composition for the obtainment of metallic effects, similar or superior to the ones achieved with the preparations comprised of noble metals with respect to luster, coloration and intensity, durability and stability of the metallic effect on the chosen substratum.

The composition is applicable in general to substrata which are which can be fired such as ceramic tiles which are already fired or raw biscuit ware used in order to produce them.

One has to point out that in this respect, although to the ceramic sector is referred to as the main target of the present invention, however this can be applied to other kinds of substrata which as in the case with ceramic tiles or biscuit ware can be fired, thus the reference must be understood an example and not as a limitation.

The composition, free of noble metals, is comprised of silicon, aluminium, iron and phosphorus oxides and can optionally contain calcium, magnesium, sodium and potassium oxides.

This composition is a preparation for the decoration of substratum capable of being fired applied, and fired in an industrial kiln, with single firing cycle between 1100-1250 DEG C for 40-90 minutes, give rise to effects similar or superior to those that formulations and compositions comprised of noble metals produce, with respect to the metallic appearance as well as to coloration, luster and metallic sheen.

The oxides comprising the composition of the invention, as it is well know, are classified as non-toxic and safe products.

Among the above-cited oxides, silicon, aluminium, iron and phosphorus oxides are "basic or substantial". In turn, calcium, magnesium sodium and potassium oxides are optional and they can be considered as "excipients or unsubstantial", although it should be made clear that their presence can provide certain desirable properties to the final composition, such as fusion capacity, although they are not essential for the obtainment of the desired metallic effect.

The proportions (percentages by weight with respect to the weight of the final product) of each one of said oxides, which comprise the composition of the invention, are indicated en the following Table 1.

| | |
|---|---|
| Si O₂ | 30-55%, |
| Al₂O₃ | 7-21 %, |
| Fe₂O₃ | 10-30% |
| P₂O₅ | 7-27 % |
| CaO | 0-7%% |
| MgO | 0-6% |
| Na₂O | 0-8% |
| K₂O | 0-8% |

The composition of the invention comprised of this mixture of oxides, can have different forms well known in different industrial sectors and in the ceramic sector as well, for example: frit, granule or pellets, enamel, micronized material, solution for serigraphy, etc. In any of the forms, the process for the obtainment of the metallic effect implies the application of the composition to the substratum to be decorated and the firing of the assembly in a conventional industrial kiln according to the cycle set out.

More specifically, in the event that the composition of the invention has the form of a frit, the mixing of said oxides is carried out first of all by means of fusing them at a high temperature. Then the frit is mixed with water and homogenized in order to obtain a suspension. The suspension thus obtained is applied to the substratum support by means of any conventional application technique and finally it is fired in an industrial kiln following the firing cycle set out (namely 1100-1250 DEG C for 40-90 minutes).

In the event that the composition of the invention has the form of granules or pellets, they are obtained by dry treatment of the cited frit. The granules or pellets thus obtained are applied directly to the substratum in the form of granules. Then the assembly is subjected to the thermal firing cycle as it has already been explained.

In the event that the composition of the invention has the form of enamel, the mixing of the starting oxides is carried out at room temperature in an aqueous medium, with subsequent homogenization and application of the suspension to he carrier or tiles, by means of any enamelling technique of ceramic tiles such as bell, disk or aerograph techniques. Then the thermal firing cycle is applied as already explained.

In the event that the composition of the invention is serigraphy, the enamel obtained by mixing in an aqueous medium at room temperature and subsequent homogenization, is dried and micronized. Then, the micronized product thus obtained is mixed with a polyglycol type serigraphic vehicle and is applied to the substratum or support with the help of appropriate serigraphic screens. Finally the previously serigraphic substratum is subjected to the thermal firing cycle.

The compositions of the invention provide many innovations and advantages in comparison to decorations carried out by adding noble metals and the use of reduction or specific firing techniques at a lower temperature. Among these advantages the following should be pointed out:
Lower cost of the raw materials used in the manufacturing thereof and therefore greater competitiveness of the obtained products.
High technical characteristics of the products obtained.

Lower environmental impact of the compositions and decoration system of the invention with regard to toxicity thereof and the wastes that can be produced.

Adaptability to the line of products presented to the majority of current technologies for manufacturing tiles, without the need to include special machines in order to achieve the desired effects.

Great stability and versatility of the products.

Wide range of products adaptable to the different decoration techniques used nowadays by the ceramic industry for the production of pavings and coverings, such as enameling (in their different types: bell, disk or gun), serigraphy, dry applications, etc.

### EMNBODIMENTS OF THE INVENTION

The present invention is additionally illustrated by means of the following examples, which should not be considered as a limitation or restriction of the scope thereof.

### EXAMPLE 1

The following oxides in the indicated proportions (percentage by weight with respect to the total mixture of oxides) were mixed with 90 g of water.

| | |
|---|---|
| Si O₂ | 39.41%, |
| Al₂O₃ | 12.56%, |
| Fe₂O₃ | 14.74% |
| P₂O₅ | 20.93 % |
| CaO | 5.16% |
| Na₂O | 6.42% |
| K₂O | 0.72% |

The obtained aqueous suspension was homogenized by grinding. 6 g of the resulting suspension were applied, by means of the gun application technique or aerograph technique to a 15×15 cm porcelain stoneware ceramic tile. An amount of 1.3 g of solid per each 100 cm² remained on the tile.

The tile was allowed to dry and once it was dry it was subjected to a firing cycle in an industrial kiln at 1,200 DEG for 80 minutes.

### EXAMPLE 2

The following oxides in the indicated proportions (percentage by weight with respect to the total mixture of oxides) were mixed with 90 g of water.

| | |
|---|---|
| Si O₂ | 37.40% |
| Al₂O₃ | 12.23%, |
| Fe₂O₃ | 18.78% |
| P₂O₅ | 19.24 % |
| CaO | 5.15% |
| Na₂O | 6.42% |
| K₂O | 0.72% |

The obtained aqueous suspension was homogenized by grinding. The mixture was dried at 115 DEG C. Once it was dried, it was micronized. 50 g of the micronized mixture were weighed and 40 g of serigraphic vehicle (polyglycol) were added. After the mixture was homogenized, it was applied to a flat 48 thread serigraphy screen.

The serigraphed tile was allowed to dry and subjected to a firing cycle in an industrial kiln at 1,180 DEG C for 65 minutes.

### EXAMPLE 3

The following oxides were mixed together in the percentages by weight that is indicated with respect to the total weight thereof:

| | |
|---|---|
| Si O₂ | 38.28% |
| Al₂O₃ | 12.59%, |
| Fe₂O₃ | 14.74% |
| P₂O₅ | 20.94% |
| CaO | 5.06% |
| Na₂O | 0.59% |
| K₂O | 7.73% |

This mixture was introduced into a fusion kiln and kept at 1,450 DEG C for 45 minutes. Then the resulting fused material (frit) was cooled at room temperature and dried by a conventional method, for example, in a laboratory oven at 100-110 DEG C, or by means of a drying lamp. The dry mixture was granulated (pelleted) with the help of a battery of sieves, taking different fractions of the granulated sample of a size between 0.1 and 1 mm. Then the granule thus obtained was applied to a ceramic tile using granule glue as an adhering agent.

The tile was allowed to dry and subjected to a firing cycle in an industrial kiln at 1,200 DEG C for 80 minutes.

The ceramic tiles obtained in these three examples had, by a visual comparison, a similar luster, sheen and coloration as that of tiles treated with metals obtained by the third fire technique or any method of the prior art.

## Claims

1. Composition to obtain metallic effects using products which are free of noble metals applied to substrata which can be subjected to fire **characterized** because this composition essentially comprises the following mixture and their percentage (percentages by weight with respect to the weight of the final product).
| | |
|---|---|
| Si O₂ | 35-52%, |
| Al₂O₃ | 11-18 %, |
| Fe₂O₃ | 10-22% |
| P₂O₅ | 12-25 % |

2. Composition to obtain metallic effects by means of products which are free of noble metals applied to substrata which can be subjected to fire according to the preceding claim **characterized** because it can optionally indude CaO, MgO, Na₂O and K₂O in this case modifying the percentages of the essential compounds as indicated in the following table.
| | |
|---|---|
| Si O₂ | 30-55%, |
| Al₂O₃ | 7-21 %, |
| Fe₂O₃ | 10-30% |
| P₂O₅ | 7-27 % |
| CaO | 0-7%% |
| MgO | 0-6% |
| Na₂O | 0-8% |
| K₂O | 0-8% |

3. Composition to obtain metallic effects using products which are free of noble metals applied to substrata capable of being subjected to fire according to the preceding claims **characterized** because it can have any of the forms which are normally used to cover surfaces especially the form of frit, granule, glaze, micronized material or products for serigraphy

4. A process for obtaining metallic effects on substrata which can be fired **characterized** because it comprises the application of any of the compositions of the claims 1 and 2 on the substrata which is going to be decorated, the said substrata can be raw or pre-fired and once the composition is applied to the substrata the firing is then done at a firing temperature ranging from 1,100DEG to 1,250 DEG C in a time ranges form 40 to 90 minutes.

## Patentansprüche

1. Zusammensetzung für d as Erzeugen metallischer Effekte durch die Benutzung von Produkten, die frei von Edelmetallen sind und die auf Substrate aufgebracht werden, die gebrannt werden können, **dadurch gekennzeichnet, dass** die genannte Zusammensetzung im wesentlichen folgende Elemente und Prozentanteile enthält:
| | |
|---|---|
| SiO₂ | 35-52 % |
| Al₂O₃ | 11-18 % |
| Fe₂O₃ | 10-22 % |
| P₂O₅ | 12-25 % |

2. Zusammensetzung für das Erzeugen metallischer Effekte durch die Benutzung von Produkten, die frei von Edelmetallen sind und die auf Substrate aufgebracht werden, die gebrannt werden können, nach dem vorhergehenden Anspruch, **dadurch gekennzeichnet, dass** wahlweise CaO, MgO, Na 20 und K20 hinzugefügt werden kann, wobei in diesem Fall die Prozentanteile der wesentlichen Elemente entsprechend nachstehender Tabelle geändert werden:
| | |
|---|---|
| SiO₂ | 30-55 % |
| Al₂O₃ | 7-21 % |
| Fe₂O₃ | 10-30 % |
| P₂O₅ | 7-27 % |
| CaO | 0-7 % |
| MgO | 0-6 % |
| Na₂O | 0-8 % |
| K₂O | 0-8 % |

3. Zusammensetzung für das Erzeugen metallischer Effekte durch die Benutzung von Produkten, die frei von Edelmetallen sind und die auf Substrate aufgebracht werden, die gebrannt werden können, nach den vorstehenden Ansprüchen, **dadurch gekennzeichnet, dass** diese jede Form annehmen kann, in der die Verbindungen für Obertlächenbeschichtungen gewöhnlich vorliegen, insbesondere die Form von Fritte, Schrot, Einbrennlack, Feinstteilchen oder Produkten für die Serigraphie.

4. Verfahren für das Erzeugen metallischer Effekte auf Substraten, die gebrannt werden können, **dadurch gekennzeichnet, dass** es die Anwendung einer der Zusammensetzungen der Ansprüche 1 und 2 auf dem zu dekorierenden Substrat umfasst; wobei dieses Substrat roh oder vorgebrannt sein kann und wobei das Substrat nach Aufbringen der Zusammensetzung gebrannt wird, bei Temperaturen zwischen 1000°-1250° und über einen Zeitraum von 40 bis 90 Minuten.

## Revendications

1. Composition pour l'obtention d'effets métalliques au moyen de l'utilisation de produits libres de métaux nobles appliqués sur des substrats susceptibles d'être soumis à cuisson, **caractérisée en ce que** ladite composition comprend essentiellement les éléments et les pourcentages suivants:
| | |
|---|---|
| Si O₂ | 35-52%, |
| Al₂O₃ | 11-18 %, |
| Fe₂O₃ | 10-22% |
| P₂O₅ | 12-25 % |

2. Composition pour l'obtention d'effets métalliques au moyen de produits libres de métaux nobles appliqués sur des substrats susceptibles d'être soumis à cuisson selon la revendication précédente, **caractérisée en ce qu'**optionnellement elle peut inclure CaO, MgO, Na₂O et K₂O en modifiant dans ce cas les pourcentages des éléments essentiels tel que cela est indiqué dans le tableau suivant;
| | |
|---|---|
| Si O₂ | 30-55%, |
| Al₂O₃ | 7-21 %, |
| Fe₂O₃ | 10-30% |
| P₂O₅ | 7-27 % |
| CaO | 0-7%% |
| MgO | 0-6% |
| Na₂O | 0-8% |
| K₂O | 0-8% |

3. Composition pour l'obtention d'effets métalliques au moyen de l'utilisation de produits libres de métaux nobles appliqués sur des substrats susceptibles d'être soumis à cuisson selon les revendications précédentes **caractérisée en ce qu'**elle peut adopter n'importe forme dans laquelle se présentent habituellement les composés pour recouvrir des surfaces, notamment la forme de fritte, frittes broyées, émail, micronisés ou produits pour sérigraphie.

4. Procédé pour l'obtention d'effets métalliques sur des substrats susceptibles de cuisson, **caractérisé en ce qu'**il comprend l'application de l'une quelconque des compositions des revendications 1 et 2 sur le substrat à décorer, ledit substrat pouvant se trouver cru ou préalablement cuit et où une fois la composition appliquée au substrat, on procède à la cuisson à une température comprise entre 1000° et 1250° dans un intervalle de temps allant de 40 à 90 minutes.
